# EUROPEAN PATENT APPLICATION

(11) **EP 3 421 937 A1**
(43) Date of publication of application: **02.01.2019**
(21) Application number: 17178394.7
(22) Date of filing: 28.06.2017
(51) Int. Cl.: G01C 21/36

(54) **NAVIGATIONAL ASSISTANCE**

(71) Applicant: Naviboss, 92150 Suresnes (FR)
(72) Inventor: LOUVRADOUX, Jean-Michel, 92150 SURESNES (FR); RICHARD, Arnaud, 75008 PARIS (FR)
(74) Representative: Nicolle, Olivier

(57) **Abstract**

Examples of providing navigational assistance are described herein. A system (104) for providing navigational assistance includes a navigational data processing unit (106) to receive navigational data that are interpretable by humans, from a source (102). Further, the navigational data processing unit (106) may process the received human interpretable navigational data into machine-interpretable data. In one example, the source (102) can be a navigational app running on a navigational device. The system (104) also includes an indicator (108) coupled to the navigational data processing unit (106) to provide navigational instructions to the user in the form of physically manifested gestures that are understandable to humans. In one example, the indicator (108) may receive the machine-interpretable data from the navigational data processing unit (106) and provides the gestures based on the received machine-interpretable data.

## Description

### TECHNICAL FIELD

The present subject matter, in general, relates to providing assistance in navigation.

### BACKGROUND

Navigation assistance include primitive systems, such as compass and maps like and provide assistance to a user to travel from one place to another in terms of routing options, elevation of a location. Recent advancements in navigation technologies have resulted in development of satellite based navigation, such as American global positioning system (GPS), Russian Global Navigation Satellite System (GLONASS), European Galileo and Chinese Beidu (COMPASS), that provide turn by turn navigation directions along with information about nearby places and traffic updates. Such system generally presents information in form of a display understandable to a user. More recently, some navigation assistance also includes voice-based system that provide audio directions to the user.

### BRIEF DESCRIPTION OF DRAWINGS

The features, aspects, and advantages of the subject matter will be better understood with regard to the following description, and accompanying figures. The use of the same reference number in different figures indicates similar or identical features and components.
Fig. 1 illustrates a computer environment for providing navigation to a user, in accordance with one implementation of the present subject matter.
Fig. 2 illustrates a processing unit, in accordance with one implementation of the present subject matter.
Fig. 3a and 3b illustrates an indicator, in accordance with one implementation of the present subject matter.
Fig. 4 illustrates a method for providing navigation, in accordance with one implementation of the present subject matter.

Navigation assistance aims to assist a user while travelling from one location to another. Conventional navigation systems though assist in providing directions, the conventional navigation systems are not intuitive and at the same time, can be distracting. For example, navigation systems that use compass and maps require constant attention of the user towards the system to interpret the directions. Further, the user intermittently glancing at the device may cause distraction. Moreover, the maps require that the user is capable to interpret the maps and understand directions. In addition, in the satellite based navigation system, the user has to glance at the device to view the directions.

On the other hand, voice-based navigation systems that provide voice support for navigation are customized from region to region to make the systems work in different regions. Owing to that, the systems are not universal in nature since the voice based system are restricted to a region where one language is spoken. Such customization results make the conventional navigational system expensive.

The present subject matter relates to aspects of providing simple and intuitive navigational assistance to the user. The navigational assistance based on the present subject matter is universal and provides navigational instructions in the form of human bodily actions.

According to an aspect, the navigational assistance includes receiving navigational data that are interpretable by humans from a source. In one example, the source can be a navigational app running on a navigational device. Further, the human interpretable navigational data can be symbols, representative of directions. Further, the received human interpretable navigational data may be converted into machine-interpretable data which is readable by an indicator, such as a robot. For example, the machine-interpretable data can be instructions to operate the indicator in a predetermined manner. In one example, the machine-interpretable data can be used to produce navigational instructions for the user in the form of physically manifested gestures that are understandable to humans.

The above-mentioned implementations are further described herein with reference to the accompanying figures. It should be noted that the description and figures relate to exemplary implementations, and should not be construed as a limitation to the present subject matter. It is also to be understood that various arrangements may be devised that, although not explicitly described or shown herein, embody the principles of the present subject matter. Moreover, all statements herein reciting principles, aspects, and embodiments of the present subject matter, as well as specific examples, are intended to encompass equivalents thereof.

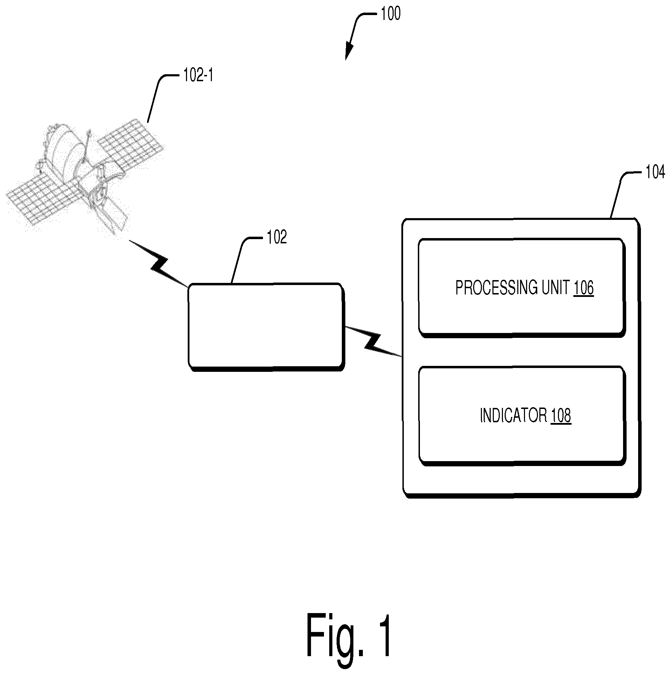

Fig. 1 illustrates a computing computer environment 100 for providing navigation to a user, in accordance with one implementation of the present subject matter. The computer environment 100 may include a source 102 for providing human interpretable navigational data. In one example, the source 102 can be a GPS handheld device or a GPS application, such as Google Maps, Waze App running on a personal handheld computing device that may receive navigational data from a satellite 102-1. In one example, human interpretable navigational data may include safety information, such as danger signs. In addition, the human interpretable navigational data may also include radar information, such as speed limits. In one example, the human interpretable navigational data may in the form of aural data, such as voice based instructions for the user. In another example, the human interpretable navigational data can be video based, such as directions, signals, or the radar information displayed on a screen.

In one example, the computer environment 100 may include a system 104 for providing navigational assistance to a user. In one example, the system 104 may include a navigational data processing unit 106 and an indicator 108. In one example, the navigational data processing unit 106 that may provide navigational instructions to the user. As a result, the time and resources spent by the navigational data processing unit 106 to interpret unprocessed navigational data is reduced. In one example, the navigational data processing unit 106 may receive human interpretable navigational data and processes the human interpretable navigational data to create machine-interpretable data.

In one implementation, the navigational data processing unit 106 and the source 102 can be different physical entities where each have separate processor. Further, the source 102 and the navigational data processing unit 106 can communicate over a wired or a wireless network. In another implementation, the source 102 and the navigational data processing unit 106 can be built into a single computing device. In such case, the source 102 and the navigational data processing unit 106 may share single processor to perform operation. In other words, the source 102 and the navigational data processing unit 106 can interact without latency, that otherwise would have occurred while communicating with each other over the wired/ wireless network.

According to an aspect, the system 104 may include an indicator 108 coupled to the navigational data processing unit 106 to provide navigational instructions to the user in the form of the physically manifested gestures. According to said aspect, the indicator 108 may receive the machine-interpretable data from the navigational data processing unit 106 and process the machine-interpretable data to provide physically manifested gestures. In one example, the indicator 108 can be robot, a 3D image generator, or a humanoid. In said example, the indicator 108 may have limbs to illustrate the physically manifested gestures to the user. Physically manifested gestures may be understood as the gesture indicative of human bodily actions. For example, the human bodily actions can be, but not limited to, pointing in a direction and waving the arm. As may be understood, such gestures are easily understandable by humans since humans are known of such gestures.

In one example, the indicator 108 may communicate with the navigational data processing unit 106 over a network. The network may be a wireless network, a wired network, or a combination thereof. The network can also be an individual network or a collection of many such individual networks, interconnected with each other and functioning as a single large network, e.g., the Internet or an intranet. The network can be one of the different types of networks, such as intranet, local area network (LAN), wide area network (WAN), and the internet. The network may either be a dedicated network, a virtual network, or a shared network, which represents an association of the different types of networks that use a variety of protocols, for example, Hypertext Transfer Protocol (HTTP), and Transmission Control Protocol/Internet Protocol (TCP/IP), to communicate with each other. An example of a network 106 may include Fiber Channel Protocol (FCP) on Fiber Channel media. In an example, the network may include a Global System for Mobile Communication (GSM) network, a Universal Mobile Telecommunications System (UMTS) network, or any other communication network that use any of the commonly used protocols, for example, Hypertext Transfer Protocol (HTTP) and Transmission Control Protocol/Internet Protocol (TCP/IP).

In one example of the present subject matter, the system 104 can be formed as a robot or a humanoid, in which case the system 104 can include the navigational data processing unit 106 and can also act as the indicator 108. In other words, the navigational data processing unit 106 can be an embedded processor. Further, the indicator can use the information from the navigational data processing unit 106 in the machine interpretable format to produce physically manifested gesture. In another example, the system 104 can include a separate indicator, such as the 3D-image generator. In such a case too, the indicator 108 can receive the information from the navigational data processing unit 106 in the machine interpretable format and use it to create a 3D avatar.

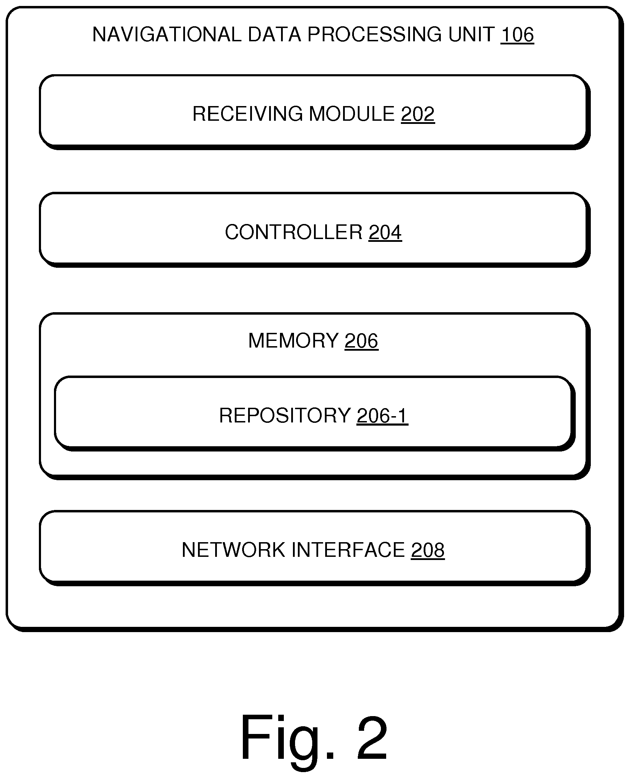

Fig. 2 illustrates the processing unit 106, in accordance with one implementation of the present subject matter. The navigational data processing unit 106 may include a receiving module 202 that may receive the human-interpretable navigational data from the source 102 (shown in Fig. 1). In one example, the receiving module 202 can be a wired/ wireless interface that communicates with the source 102. The navigational data processing unit 106 may also include a controller 204 for processing the human-interpretable navigational data from the source 102. The controller 204 can be a single processing unit or a number of units, all of which could include multiple computing units. The controller 204 may be implemented as one or more microprocessors, microcomputers, microcontrollers, digital signal processors, central processing units, state machines, logic circuitries, and/or any devices that manipulate signals, based on operational instructions. The controller 204 may further be coupled to a memory 206 which may further include computer readable instructions for the controller 204 and a repository 206-1 that stores machine-interpretable data corresponding to all possible human interpretable navigational data. In one example, the controller 204 access the repository 206-1 to determine the corresponding machine-interpretable data for received human interpretable navigational data. In one example, the controller 204 may check for a machine-interpretable data that corresponds to the human-interpretable navigational data. Accordingly, the controller 204 determines the machine-interpretable data to be communicated to the indicator 108 (shown in Fig. 1). The navigational data processing unit 106 also include a network interface 208 to communicate with the indicator 108. The network may be a wireless network, a wired network, or a combination thereof. The network can also be an individual network or a collection of many such individual networks, interconnected with each other and functioning as a single large network, e.g., the Internet or an intranet. The network can be one of the different types of networks, such as intranet, local area network (LAN), wide area network (WAN), and the internet. The network may either be a dedicated network, a virtual network, or a shared network, which represents an association of the different types of networks that use a variety of protocols, for example, Hypertext Transfer Protocol (HTTP), and Transmission Control Protocol/Internet Protocol (TCP/IP), to communicate with each other. An example of a network 106 may include Fiber Channel Protocol (FCP) on Fiber Channel media. In an example, the network 106 may include a Global System for Mobile Communication (GSM) network, a Universal Mobile Telecommunications System (UMTS) network, or any other communication network that use any of the commonly used protocols, for example, Hypertext Transfer Protocol (HTTP) and Transmission Control Protocol/Internet Protocol (TCP/IP).

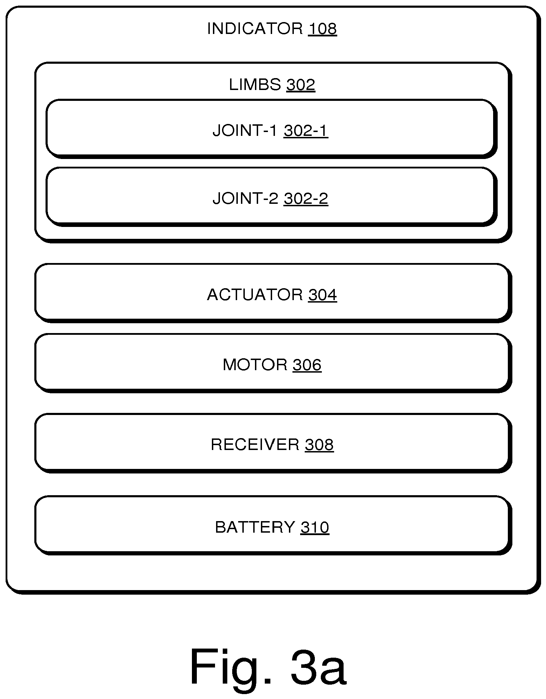

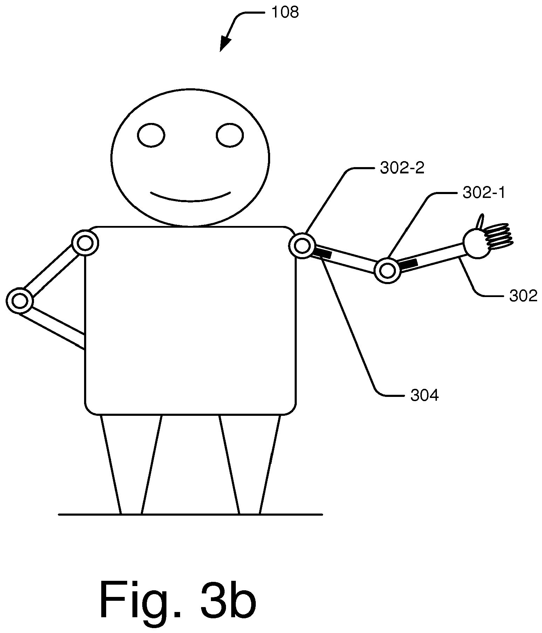

The operation of the navigational data processing unit 106 would now be described with respect to Fig 2. For the foregoing description, it is assumed that the source 102 and the system 104 are shares a same processor. In other words, the processor provides a common architecture/ operating system for the source 102 and the system 104. Initially, both the source 102 and the system 104 are invoked by the processor to initialize the navigational assistance. Thereafter, the user may feed the information to the source so as to obtain human interpretable navigational data from the source 102. For example, the user may feed the GPS coordinates of a destination. Accordingly, the source 102 may generate human-interpretable navigational data and relays the same to a display screen or a speaker of the source 102. In addition, the system 104 also receives the same output from the source 102. In one example, the receiving module 202 may receive the human interpretable navigational data from the source 102. For example, the human interpretable navigational data can be an instruction for the user to turn right. Once received, the controller 204 of the navigational data processing unit 106 search inside the repository 206-1 for a match of the received human interpretable navigational data. In one example, the controller 204 check for a machine-interpretable data that corresponds to the received human interpretable navigational data. Once the match is found, the controller 204 communicates the matching machine-interpretable data to the network module 208 so that the network module 208 relays the machine-interpretable data to the indicator 108. The machine-interpretable data used by the indicator 108 to produce physically manifested gesture. The manner by which the indicator 108 produces the physically manifested gesture would be explained in detail with respect to Fig. 3a and 3b.

Fig. 3a and 3b illustrates the indicator 108, in accordance with one implementation of the present subject matter. The indicator 108 may provide physically manifested gestures like pointing towards a direction. According to the illustrated aspect, the indicator 108 may include limbs 302 that can exhibit motion similar to the bodily actions by humans. In other words, the limbs of the indicator 108 can move in a similar fashion as the movement of arms and legs of the humans. Further, the limbs 302 may have joints 302-1, 302-2, so on to facilitate in making bodily actions. The indicator 108 also includes a plurality of actuators 304 to move the limbs 302 to make bodily actions. The actuators 304 may include, but not limited to, pneumatic actuators, hydraulic actuators, and electromagnetic actuators. Further, each limb may have one or two actuators depending upon the kind of motion to be achieved by the limbs 302. According to the illustrated aspect, the indicator 108 may include a motor 306 to operate the actuators 304. In one example, the motor 306 can be a stepper motor, and servo motor. As may be understood, the indicator 108 may include other sources, such as hydraulic or pneumatic pumps for operating the actuators 304.

According to an aspect of the present subject matter, the indicator 108 may include a control unit for controlling the operation of the indicator 108. The control unit can be implemented as one or more microprocessors, microcomputers, microcontrollers, digital signal processors, central processing units, state machines, logic circuitries, and/or any devices that manipulate signals, based on operational instructions. During operation, the control unit may interpret the machine-interpretable data received from the navigational data processing unit 106 and operate the motor 306 to impart motion to the actuators 304. In one example, the control unit may include a database that stores data related to the actuation of the motor 306 based on the machine-interpretable data. In another implementation, the motor 306 can be operated directly by the controller 204 (shown in Fig. 2).

The indicator 108 may also include a receiver 308 that can communicate with the network interface 208 (shown in Fig. 2) to receive the machine-interpretable data. The indicator 108 may also include a battery 310 to power the indicator 108 and a speaker to provide voice instructions in addition to the gestures.

During operation, once the indicator 108 receives the machine-interpretable data, the control unit actuates the motor 306 to operate the actuators 304. In one example, the motor 306 may operate the actuators 304 on the limb of the indicator 108 in a manner that the left limb of the indicator 108 points in the right direction. Further, the indicator 108 will continue to make gesture as and when the source 102 feeds the human interpretable navigational data to the navigational data processing unit 106 and the navigational data processing unit 106 relays the corresponding machine-interpretable data to the indicator 108. Further, once the user has reached the destination, the source 102 relays the human interpretable navigational data, indicating that the user has arrived at the destination, the system 104 receives the same. Accordingly, the controller 204 checks for the corresponding machine-interpretable data and relays the machine-interpretable data to the indicator 108. Once received, the control unit actuates the motor 306 to move the actuators 304 to perform gesture, such as making a saluting gesture to indicate that the user has reached the destination.

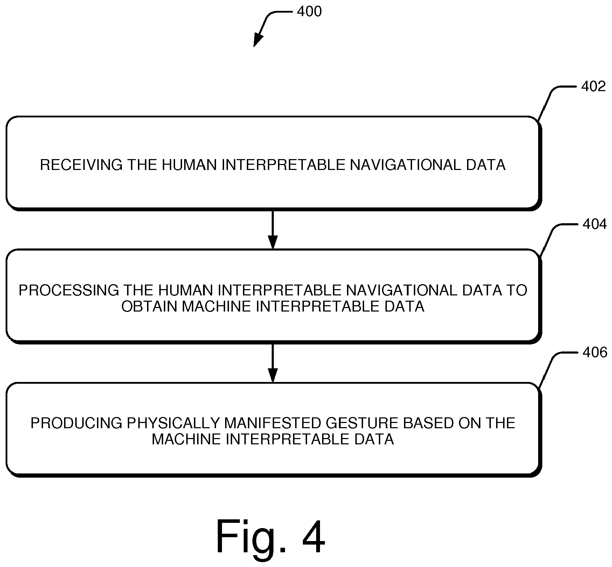

Fig. 4 illustrates a method 400 for providing navigation, in accordance with one implementation of the present subject matter. The method 400 can be implemented by the navigational data processing unit 106. The exemplary method may be described in the general context of computer executable instructions embodied on a computer-readable medium. Generally, computer executable instructions can include routines, programs, objects, components, data structures, procedures, modules, functions, etc., which perform particular functions or implement particular abstract data types. The method may also be practiced in a distributed computing environment where functions are performed by remote processing devices that are linked through a communications network. In a distributed computing environment, computer executable instructions may be located in both local and remote computer storage media, including memory storage devices.

The order in which the method is described is not intended to be construed as a limitation, and any number of the described method blocks can be combined in any order to implement the method, or an alternative method. Additionally, individual blocks may be deleted from the method without departing from the spirit and scope of the methods, systems and devices described herein. Furthermore, the method can be implemented in any suitable hardware, software, firmware, or combination thereof.

The method 400 begins at block 402 when the navigational data processing unit 106 receives the human interpretable navigational data from the source 102. Thereafter, the navigational data processing unit 106 may receive human interpretable navigational data. In one example, the received human-interpretable navigational data is also relayed as an output of the source on a display screen, or voice command.

At block 404, the navigational data processing unit 106 processes the human interpretable navigational data into machine-interpretable data. In one example, the navigational data processing unit 106 may search for a match for the human interpretable navigational data stored in a repository 206-1 to determine the machine-interpretable data corresponding to the human interpretable navigational data.

At block 406, the navigational data processing unit 106 may provide the indicator 108 with the machine-interpretable data. Further, the based on the received machine-interpretable data, the indicator 108 may determine the physically manifested gesture to be performed.

At block 408, once determined, the indicator 108 makes the physically manifested gestures in the form of human bodily actions in a manner as explained with respect to Fig. 3a and 3b.

Although the subject matter has been described with reference to specific embodiments, this description is not meant to be construed in a limiting sense. Various modifications of the disclosed embodiments, as well as alternate embodiments of the subject matter, will become apparent to persons skilled in the art upon reference to the description of the subject matter. It is therefore contemplated that such modifications can be made without departing from the spirit or scope of the present subject matter as defined.

## Claims

1. A system (104) for providing navigational assistance to a user comprising:
a navigational data processing unit (106) to receive human interpretable navigational data from a source (102) to process the human interpretable navigational data into machine-interpretable data, and an indicator (108) coupled to the navigational data processing unit (106) to process machine-interpretable data to provide physically manifested gestures, wherein the physically manifested gestures are indicative of human bodily actions.

2. The system (104) as claimed in claim 1, wherein the indicator (108) is one of robot, a 3D image generator, and a humanoid.

3. The system (104) as claimed in claim 1, wherein the navigational data processing unit (106) is to search for a match for the human interpretable navigational data stored in a repository (206-1) to determine the machine-interpretable data corresponding to the human interpretable navigational data.

4. The system (104) as claimed in claim 2, wherein the indicator (108) has limbs (302).

5. The system (104) as claimed in claim 4, wherein the indicator (108) makes limb gesture.

6. The system (104) as claimed in claim 1, wherein the human interpretable navigational data is one of aural and visual based.

7. The system (104) as claimed in claim 1, wherein the source (102) is a navigational system (104).

8. A method of providing navigational assistance to a user, the method comprising:
receiving, from a source (102) at a navigational data processing unit (106), human interpretable navigational data;
processing, by the navigational data processing unit (106), the human interpretable navigational data into machine-interpretable data;
receiving, at an indicator (108), machine-interpretable data from the navigational data processing unit (106);
providing, by the indicator (108), physically manifested gestures, wherein the physically manifested gestures are indicative of human bodily actions.

9. The method as claimed in 8, wherein the indicator (108) is one of robot, a 3D image generator, and a humanoid.

10. The method as claimed in 8 further comprising:
Searching for a match for the human interpretable navigational data stored in a repository (206-1) to determine the machine-interpretable data corresponding to the human interpretable navigational data.

11. The method as claimed in 8, wherein the indicator (108) has limbs (302).

12. The method as claimed in 11, wherein the providing comprises the indicator (108) making a limb gesture.

13. The method as claimed in 8, wherein the human interpretable navigational data is one of aural and visual based.
